# EUROPEAN PATENT APPLICATION

(11) **EP 4 365 737 A1**
(43) Date of publication of application: **08.05.2024**
(21) Application number: 22306662.2
(22) Date of filing: 04.11.2022
(51) Int. Cl.: G06F 9/48

(54) **METHOD OF EXECUTING A PLURALITY OF EXECUTABLE TASKS IN A COMPUTER SYSTEM**

(71) Applicant: Aptiv Technologies Limited, St. Michael (BB)
(72) Inventor: POUYOLLON, Xavier, 56250 Saint Nolff (FR)
(74) Representative: Vigand, Philippe

(57) **Abstract**

The method comprises the steps of
- executing (S1) a first executable task (A) producing data over a plurality of first time intervals ;
- writing (S2) in a buffer memory data produced in first time intervals with a timestamp indicating an end time of the corresponding first time interval;
- executing (S3) a second executable task (B) reading the produced data from the buffer memory, over a plurality of second time intervals, wherein the produced data read in a second time interval has a timestamp before a start time of said second time interval.

## Description

### TECHNICAL FIELD

The present disclosure relates a method of executing a plurality of executable tasks in a computer system. The computer system can be used for example in a vehicle.

### BACKGROUND

In the automotive industry, AUTOSAR (AUTomotive Open System ARchitecture) is a partnership of vehicle manufacturers, suppliers, service providers and companies from the automotive industry with the objective to create and establish an open and standardized software architecture for automotive electronic control units (ECUs).

AUTOSAR has developed the concept of Logical Execution Time (LET). The LET concept ensures time and value determinism of data exchange and execution of executable tasks in a computer system.

Let's consider a computer system including a first executable task producing data and at least one second executable task consuming the produced data. According to the LET concept of AUTOSAR, the execution of each executable task is confined to fixed periodic time intervals, the logical execution time or LET intervals. The LET intervals of each executable task are specified by specific predefined or fixed parameters: period, offset, and duration. The executable task can be activated and executed once at any time within its LET intervals.

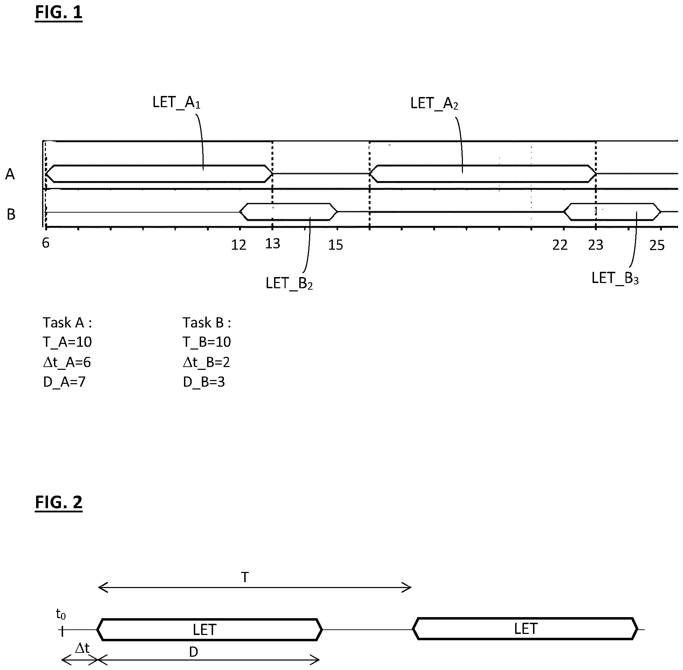

Figure 1 illustrates an example of LET intervals LET_Ai of a first executable task A producing data and LET intervals LET_Bj of a second executable task B consuming the produced data, respectively.

The intervals LET_Ai can be specified by the following parameters, with i≥1, expressed in time units:
- period = 10;
- offset = 6;
- duration= 7.

The intervals LET_Bj, with j≥1, can be specified by the following parameters, expressed in time units:
- period = 10;
- offset = 2;
- duration= 3.

In operation, the data produced by the first executable task A in a LET interval LET_Ai is written in a shared or global buffer memory, and the second executable task B reads from the global buffer memory the produced data in a LET interval LET_Bj. The first executable task A may write the data produced in the LET interval LET_Ai during a short period of time at the end of the LET interval LET_Ai. The second executable task B may read the produced data during a short period of time at the beginning of the LET interval LET_Bj. The produced data can be a variable, for example a vehicle speed or a measured physical quantity, and successive values of this variable are respectively produced and written in the buffer memory in the successive LET intervals LET_Ai with i=1, 2,....

As shown in figure 1, the time intervals LET_Ai and LET_Bj may overlap. In case the first executable task A and second executable task B are executed on a single processor, the two tasks A, B are sequentially executed by the processor. As a result, the second executable task B reads data that was produced in the past by the first executable task A. However, in case of migration from a one-core system to a multi-core system, the two tasks A, B are likely to be activated at the same time by two different processors. In such a situation, the first executable task A and the second executable task B may respectively write and read in a same memory slot at the same time. As a result, the data read by the second executable task B from the buffer memory may not be reliable.

Furthermore, even in a single core system, the data read by the second task B may not be reliable in certain circumstances. For example, if the reading task B has a higher priority than the writing task A, the writing task A could be preempted by the reading task B. In such case, writing the data produced by the task A could be incomplete and the task B might read erroneous data that is "half-written".

Therefore, there is a need for improving the situation. More precisely, there is a need for facilitating the migration of a plurality of executable tasks from a computer system including one single processor to a computer system including multiple processors.

### SUMMARY

The present disclosure concerns a computer implemented method of executing a plurality of executable tasks in a computer system, the method comprising
- executing a first executable task producing data over a plurality of first time intervals;
- writing in a buffer memory data produced in first time intervals with a timestamp indicating an end time of the corresponding first time interval;
- executing a second executable task reading the produced data from the buffer memory, over a plurality of second time intervals, wherein the produced data read in a second time interval has a timestamp before a start time of said second time interval.

When a data is produced by executing the first executable task in a first time interval, a timestamp for the produced data is set to an end time of said first time interval. This timestamp is then used by the second executable task to determine when the data can be read. The data may be produced and written in the buffer memory within the first time interval, but can only be read by the second executable task from the end time of the first time interval based on the timestamp. The use of timestamps improves the synchronization between the first and second executable tasks, and consequently facilitates the migration of a plurality of executable tasks from a computer system including one single processor to a computer system including multiple processors. It is not necessary to provide critical sections to avoid concurrent accesses to the shared buffer memory, which may lead to unexpected or erroneous behavior. In case of a computer system having two or more processors, the present method allows to prevent the first executable task, or producing task, and the second executable task, or reading task, from accessing the shared buffer memory at the same time.

In an embodiment, the method may further comprise a step of selecting, during a second time interval, the produced data with the latest timestamp before the start time of said second time interval.

The time intervals of each executable task can be periodic.

Furthermore, the time intervals of each executable task can have a fixed duration.

In an embodiment, the method may further comprise a step of checking if the produced data read from the buffer memory in a second time interval has been produced in accordance with a periodicity of the first time intervals, based on the timestamp of said produced data.

The step of checking can comprise a step of comparing a time gap between the start time of said second time interval and the timestamp of the produced data read from the buffer memory and the periodicity of the first time intervals, and, if the time gap exceeds the periodicity of the first time intervals, a signal indicative of not producing data with the periodicity of the first time intervals can be outputted and an error message can be generated.

Thanks to that, it can be detected that the first executable task has stopped producing data for example.

Let's consider that, for any reason, the first executable task does not produce and/or write data, for example a new value of a variable x, at a scheduled first time interval, in accordance with a rate of data production. Consequently, the second executable task will read an old data, for example an old value of the variable x, at the next scheduled second time interval. Thanks to the timestamp, the second executable task can detect that the data read from the buffer memory is an old data. Furthermore, the second executable task can detect that the first executable task has not produced the data, for example a new value of the variable x, in accordance with the expected rate of data production, based on the timestamp of the data read from the buffer memory.

This is a security mechanism to make sure that data, for example successive values of a given variable x, read by the second executable task, or reading task, is produced in accordance with a given rate of data production.

In an embodiment, a task scheduling pattern including a sequence of one or more first time intervals and a sequence of one or more second time intervals may be cyclically executed and, at each cycle:
the step of writing the data produced in a first time interval with a timestamp indicating an end time of said first time interval may include a step of determining a memory slot where to write said produced data based on an order information of said first interval in the sequence of first time intervals and a step of writing said produced data at the determined memory slot.

In an embodiment, the buffer memory including a plurality of indexed memory slots, determining the memory slot where to write said produced data may include selecting a memory slot index from a predetermined first list of memory slot indexes matching the sequence of first time intervals.

In an embodiment, at each cycle, the step of reading the produced data in a second time interval may include determining a memory slot where to read the produced data based on an order information of said second time interval in the sequence of second time intervals.

Furthermore, the buffer memory including a plurality of indexed memory slots,
determining the memory slot where to read the produced data may include selecting a memory slot index from a predetermined second list of memory slot indexes matching the second sequence of second time intervals.

In an embodiment, the buffer memory may be a ring buffer and the step of reading from the buffer memory the produced data, in a second time interval, may be performed by searching in the buffer memory a timestamp that is before a start time of said second time interval and retrieving from the buffer memory the produced data with the found timestamp.

In an embodiment, the method may further comprise a step of monitoring if the execution of each executable task has been completed within the corresponding time interval.

The present disclosure also concerns:
- a computer system comprising at least one processor configured to perform the method previously defined;
- a computer program comprising instructions which, when the program is executed by a computer, cause the computer to carry out the method previously defined;
- a vehicle including the computer system above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows time intervals for executing one executable task A producing data and one executable task B reading the produced data, according to a first example.
Figure 2 shows the different parameters specifying the time intervals of an executable task, according to an embodiment.
Figure 3 represents a flow chart of a method of executing one executable task A producing data and one executable task B reading the produced data, according to an embodiment.
Figure 4 illustrates a process of checking the execution of the task A producing data, according to an embodiment.
Figure 5 shows time intervals for executing one executable task A producing data and one executable task B reading the produced data, according to a second example.
Figure 6 shows time intervals for executing one executable task A producing data and a plurality of executable tasks B1 to B4 reading the produced data, according to a third example.
Figure 7 shows time intervals for executing one executable task producing data A and a plurality of executable tasks B1, B2 reading the produced data, according to a fourth example.

### DETAILED DESCRIPTION

The present disclosure concerns a method of executing a plurality of executable tasks in a computer system. For example, the computer system can be implemented in a vehicle. The computer system may include an operating system responsible for scheduling and/or controlling the execution of the plurality of executable tasks.

An executable task can be defined as a sequence of programmed or software instructions that can be managed independently by a scheduler assigning resources, such as processors, to perform executable tasks.

The computer system is implemented with hardware and software. In an embodiment, the computer system includes one or more processors and software or applications running on the processor(s). The software comprises executable tasks. In operation, each executable task is executed by a processor of the computer system. In an embodiment, the computer system has one processor that executes all the executable tasks. In other embodiments, the computer system may have two or more processors, and the execution of the plurality of executable tasks may be distributed on the different processors.

The computer system is configured to execute the executable tasks over scheduled time intervals. In other words, in operation, each executable task can be executed over time intervals specifically scheduled for said executable task. It means that the execution of each executable task is confined to the scheduled time intervals of this task. The executable task may be activated at any time during each time interval, for example based on a mechanism of task pre-emption of the processor. In an embodiment, the time intervals for executing each executable task are periodic and can be specified by the following parameters, represented in figure 2, including:
- a period or periodicity T,
- an offset Δt relative to a reference time to, and
- a duration D.

In an embodiment, the time intervals of an executable task may be LET (Logical Execution Time) intervals defined by AUTOSAR.

Figure 2 illustrates, for one executable task, the period T between consecutive time intervals of the executable task, the offset Δt between the reference time t₀ and an initial time when the execution of the executable task in time intervals is started, and the duration D of each time interval of the executable task. The reference time to can be for example a start time when an operating system of the computer system starts scheduling the tasks. However, the start time could be set differently.

In the computer system, an executable task A may produce data that is consumed or used by another executable task B.

For example, the produced data can be a variable (e.g., a vehicle speed, a measured temperature, a measure distance, or any other type of variable), and successive values of said data or variable can be produced by the executable task A. This example is only illustrative and non-limitative.

A global or shared buffer memory GMEM can be used to communicate the produced data from the task A to the task B. In operation, the produced data may be written by the task A from a local buffer memory LMEM_A of the task A into the global buffer memory GMEM, and then read by the task B from the global buffer memory GMEM and stored in a local buffer memory LMEM_B of the task B.

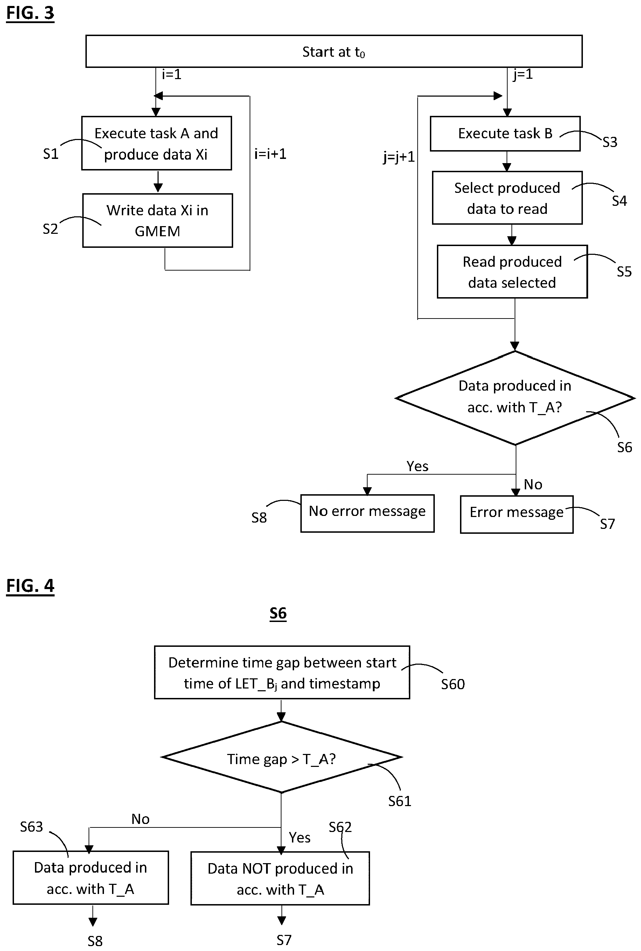

The method of executing the executable task A and the executable task B in the computer system will now be described, according to an embodiment, with reference to figures 1 and 3.

The time intervals of the executable task A can be specified by the following parameters including:
- a period T_A,
- an offset Δt_A relative to a reference time to, and
- a duration D_A.

The time intervals of the executable task B can be specified by the following parameters including:
- a period T_B,
- an offset Δt_B relative to a reference time to, and
- a duration D_B.

Figure 1 indicates numerical values for the above parameters, reproduced below, as an illustrative and non-limitative example, and represents time intervals of the tasks A and B from time 6 to time 25:

| Task A: | Task B : |
|---|---|
| T_A=10 | T_B=10 |
| Δt_A=6 | Δt_B=2 |
| D_A=7 | D_B=3 |

In an initial step S0, the computer system is started at a reference time to.

From time t₀+Δt_A, corresponding to time 6 in the example of figure 1, a step S1 of executing the executable task A and producing data and a step S2 of writing the produced data in the global buffer memory GMEM are periodically executed within the periodic time intervals LET_Aᵢ with i=1,2,3, ... The executable task A may be activated at any time during each time interval LET_Aᵢ. In an embodiment, the executable task A is activated once at any time during each time interval LET_Ai.

The execution of the executable task A during each time interval LET_Aᵢ produces data, in the step S1. In an embodiment, the produced data may be temporarily written in a local the memory LMEM_A of the executable task A and then transferred or copied from the local buffer memory LMEM_A of the executable task A to the global buffer memory GMEM, in the step S2. The data produced in the time interval LET_Aᵢ may be written in the global buffer memory GMEM during a short period of time at the end of the time interval LET_Aᵢ. Alternatively, the produced data may be written in the global buffer memory GMEM when the task A finishes, which may be before the end of the time interval LET_Aᵢ. The action of writing S2 in the global buffer memory GMEM the data produced by the task A in a time interval LET_Aᵢ may be performed by the task A being executed (i.e., during the execution S1 of the task A). In other words, writing S2 the data produced by the task A in a time interval LET_Aᵢ may be included in the execution S1 of the task A.

According to the present disclosure, the data produced by the executable task A in the time interval LET_Aᵢ is written in the global buffer memory GMEM with a timestamp indicating an end time of the time interval LET_Aᵢ. In other words, the timestamp of the data produced in the time interval LET_Aᵢ indicates the end time t₀+Δt_A+ D_A+(i-1)*T_A with i≥1.

Furthermore, from time t₀+Δt_B, corresponding to time 2 in the example of figure 1, a step S3 of executing the executable task B is periodically executed within the periodic time intervals LET_Bⱼ with j=1,2,3, ... The executable task B may be activated, typically once, at any time during each time interval LET_Bⱼ. During the execution of the task B in each time interval LET_Bⱼ, a step S4 of selecting data produced by the task A in the global buffer memory GMEM, and a step S5 of reading the produced data, selected in the step S3, from the global buffer memory GMEM, may be performed.

In an embodiment, in the step S4 performed in the time interval LET_Bⱼ, with j≥1, the produced data with a timestamp that matches the start time of the time interval LET_Bⱼ is selected in the global buffer memory GMEM. According to the present disclosure, the timestamp that matches the start time of the time interval LET_Bⱼ is a timestamp before a start time of said time interval LET_Bⱼ, advantageously the latest timestamp before the start time of the time interval LET_Bⱼ. In other words, the timestamp of the data produced by the task A that is selected and read from the global buffer memory GMEM by the task B in the time interval LET_Bⱼ indicates the latest or closest time before the start time of the time interval LET_Bⱼ.

During a transitional period of task initialization, from the reference time t₀ to the end of the first time interval LET_A₁ of the task A, the task A has not yet produced and written data in the global buffer memory GMEM. In that case, the task B may select and read from the global buffer memory GMEM an initialization data with an initialization timestamp, for example "0", prestored in the global buffer memory GMEM.

It should be noted that the task A may produce data during a time interval, that is not read by any task B, for example because the periodicity of the task A is more than the periodicity of the task B. In such a case, the produced data, read by any task B, may not be written in the global buffer memory.

With reference to figure 1, let's consider that the task A is executed and produces data X1 within the time interval LET_A₁, in a first iteration of the step S1. The produced data X1 with a timestamp indicating the end time of the time interval LET_A₁, here time 13, is written in the global buffer memory GMEM, in a first iteration of the step S2. The step S2 may be performed at the end of the time interval LET_A₁. Alternatively, the step S2 may be performed within time interval LET_A₁, just after producing at any time the data X1 in the time interval LET_A₁. In an embodiment, a pair of values including the produced data and its timestamp, here (X1,13), may be written in a same memory slot of the global buffer memory GMEM. The produced data X1 may be copied from the local buffer memory LMEM_A of the task A to said memory slot of the global buffer memory GMEM, and the timestamp 13 may be added and stored into said memory slot.

Then, the task A is executed again and produces data X2 within the next time interval LET_A₂, in a second iteration of the step S1. The produced data X2 with a timestamp indicating the end time of the time interval LET_A₂, here time 23, namely (X2, 23), is written in the global buffer memory GMEM, in the second iteration of step S2, in an analogous manner.

In parallel, the task B is periodically executed in the time intervals LET_Bⱼ, with j≥1, in successive iterations of the step S3. During the execution of the task B in each time interval LET_Bⱼ, the step S4 of selecting in the global buffer memory GMEM the data produced by the task A with a timestamp matching the start time of the time interval LET_Bⱼ, which means here the latest timestamp before the start time of the time interval LET_Bⱼ, is performed. Then, the produced data selected in the step S4 is read by the task B in the step S5.

In the example of figure 1, in the first time interval LET_B₁ between time 2 and time 5 (not represented), the task A has not produced any data yet. In that case, the task B may select in the global buffer memory GMEM a prestored initialization data X₀ with a timestamp that is for example set to 0.

In the time interval LET_B₂, the task A may have already produced the data X1. At the beginning of the time interval LET_B₂, between time 12 and time 13, the task A may have already written or is writing data X1 with its timestamp 13 in the global buffer memory GMEM. However, in the time interval LET_B₂, the task B searches or selects in the global buffer memory GMEM a produced data whose timestamp is before the start time 12 of the time interval LET_B₂. As a result, the data X1 with the timestamp 13, that is after 12, is not selected. Instead, the task B selects the initialization value X₀ whose timestamp 0 is before the timestamp 12.

In the time interval LET_B₃, the task B searches or selects in the global buffer memory GMEM the produced data whose timestamp is the latest timestamp before the start time 22 of the time interval LET_B₃. Consequently, the task B selects the produced data X1 with the timestamp 13. Indeed, even if, at the beginning of the time interval LET_B₃, between time 22 and time 23, the task A may have already written or is writing data X2 in the global buffer memory GMEM, the data X2 is not selected because its timestamp 23 is after the start time 22 of the time interval LET_B₃.

Optionally, the method may further comprise a step S6 of checking if the data produced by the task A in each periodic time interval LET_Aᵢ and read from the global buffer memory by the task B in a time interval LET_Bⱼ has been produced in accordance with the periodicity of the time intervals LET_Aᵢ. The step S6 is advantageously performed after the transitional period of task initialization during which initialization data is read by the task B in the global buffer memory. In an embodiment illustrated in figure 4, in a step S60, for each time interval LET_Bⱼ of the task B, a time gap between the start time of said time interval LET_Bⱼ and the timestamp of the produced data read from the global buffer memory GMEM in said time interval LET_Bⱼ is determined, and then compared to the period T_A of the time intervals of the task A, in a step S61. If the determined time gap exceeds the period T_A of the time intervals of the task A, a signal indicative of not producing data with the periodicity of the time intervals of the task A is outputted, in a step S62. If the determined time gap is less or equal to the period T_A of the time intervals of the task A, it is detected that data has been produced by the task A with the periodicity T_A of the time intervals of the task A, in a step S63.

If the task A has not produced data with the periodicity T_A, an error message may be generated by the computer system, in a step S7. For example, the error message indicates that an error has occurred in the execution of the task A. If it is detected that the task A has produced data in accordance with its periodicity T_A, no error message is generated by the computer system (step S8).

The steps S1-S8 of the method previously described may be implemented by a mix of software and hardware. In an embodiment, the method is implemented by a software module, or computer program, comprising instructions which, when the software module or program is executed by a computer, cause the computer, to carry out the method.

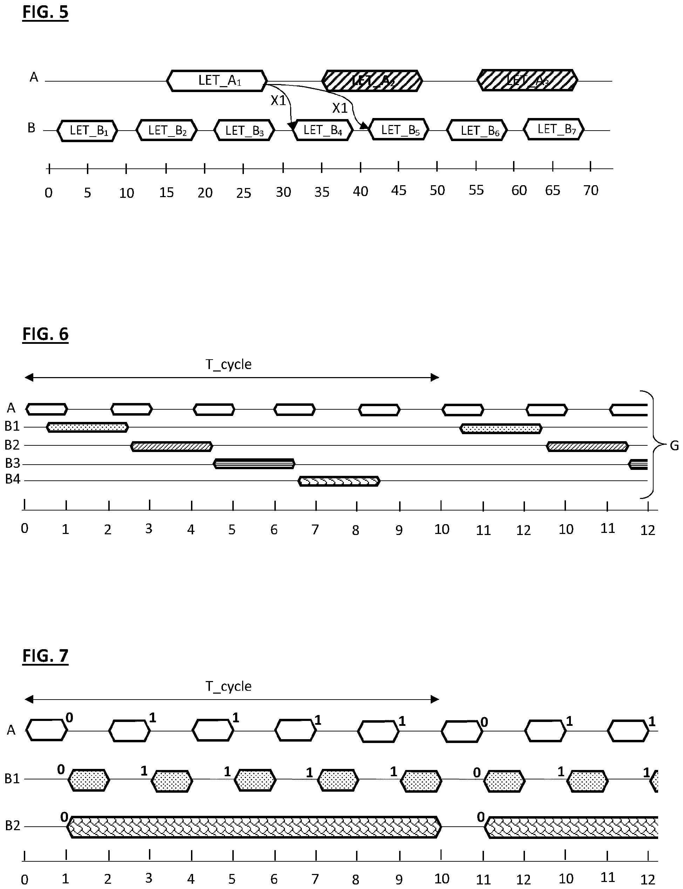

Figure 5 illustrates the time intervals LET_Aᵢ and LET_Bⱼ of an executable task A producing data and an executable task B reading the data produced by the task A respectively. The time intervals LET_Aᵢ and LET_Bⱼ can be specified by the parameters below:

| Task A : | Task B : |
|---|---|
| T_A=20 | T_B=10 |
| Δt_A=15 | Δt_B=2 |
| D_A=12 | D_B=7 |

In this illustrative example, from time 35, the executable task A stops producing data. In the time intervals LET_B₄ and LET_B₅, the task B reads from the global buffer memory GMEM the data X1 whose timestamp is 27. In the time interval LET_B₄, the computer system determines the time gap of 32-27=5 between the start time 32 of LET_B₄ and the timestamp 27 of X1, and compares it to the period T_A=20 of the task A. As the time gap 5 is below the period T_A=20, it is determined that the task A has produced data in accordance with its periodicity T_A. In the time interval LET_B₅, the computer system determines the time gap of 42-27=15 between the start time 42 of LET_B₅ and the timestamp 27 of X1, and compares it to the period T_A=20 of the task A. As the time gap 15 is below the period T_A=20, it is determined that the task A has produced data in accordance with its periodicity T_A. In the time interval LET_B₆, the computer system determines the time gap of 52-27=25 between the start time 52 of LET_B₆ and the timestamp 27 of X1, and compares it to the period T_A=20 of the task A. As the time gap 25 is above the period T_A=20, it is detected that the task A has not produced data in accordance with its periodicity.

In the embodiment previously described, one executable task A produces data and one executable task B reads the data produced by the task A, in the computer system.

In other embodiments, one executable task A produces data and a plurality of executable tasks B1, B2, ... may read the data produced by the task A, in the computer system. The executable task A and the one or more executable tasks B1, B2, ... form a group G, or channel, of tasks.

Figure 6 illustrates an example of a group G of executable tasks including a task A producing data and four tasks B1, B2, B3 and B4 reading the data produced by the task A. The time intervals of the tasks A, B1, B2, B3 and B4 can be specified by the parameters below:

| Task A: | Task B1 : | Task B2 : | Task B3 : | Task B4 : |
|---|---|---|---|---|
| T_A=2 | T_B1=10 | T_B2=10 | T_B3=10 | T_B4=10 |
| Δt_A=0 | Δt_B1=0,5 | Δt_B2=2,5 | Δt_B3=4,5 | Δt_B4=6,5 |
| D_A=1 | D_B1=2 | D_B2=2 | D_B3=2 | D_B1=2 |

In an embodiment, the executable tasks of the computer system are scheduled based on a task scheduling pattern. In operation, the executable tasks are executed by the computer system in such a manner that said task scheduling pattern is cyclically executed. The task scheduling pattern includes a sequence of one or more consecutive time intervals of the task A and, for each task Bj, a sequence of one or more consecutive time intervals of said task Bj, with j≥1. It has a duration, denoted as an "hyper-period", that corresponds to the period of the cycle, referenced as T_cycle in figure 6. In other words, the task scheduling pattern form a cycle that is iteratively executed with a periodicity equal to the duration T_cycle of the task scheduling pattern.

In the example of figure 6, the hyper-period T_cycle is 10. The task scheduling pattern including the respective time intervals of the tasks A, B1, B2, B3 and B4, between time 0 and time 10, is repeated at each cycle with a periodicity of 10.

The computer system may include several groups Gₙ, or channels, of executable tasks, each group Gₙ including one executable task Aₙ producing data and one or more executable tasks Bₙ1, Bₙ2, ... reading the data produced by the task An, with n≥1.

The global buffer memory GMEM may be implemented in different manners.

In an embodiment, the global buffer memory GMEM includes a plurality of indexed memory slots. In other words, the global buffer memory GMEM contains memory slots and respective indexes, typically index numbers, are assigned to said memory slots. For example, the global buffer memory GMEM has N memory slots with N≥1, and the index numbers in = 1, 2, ..., N are respectively assigned to the N memory slots.

As previously disclosed, in a group of executable tasks including one task A producing data and one or more tasks Bj with j≥1 reading the data produced by the task A, the tasks A and Bj are executed in respective time intervals based on a task scheduling pattern that is cyclically executed, the task scheduling pattern including a sequence of one or more consecutive time intervals of the task A and, for each task Bj, a sequence of one or more consecutive time intervals of said task Bj. In such a case, the memory slot(s) where to write data produced by the task A and the memory slot(s) where to read the produced data by each task Bj during one cycle or one iteration of the task scheduling pattern can be predetermined and used at each cycle. In an embodiment, for each task A or Bj, a list of memory slot indexes matching the sequence of one or more consecutive time intervals of said task in the task scheduling pattern is predetermined. The order of the indexes in the list for each task A or Bj corresponds to the order of the time intervals of said task A or Bj in the task scheduling pattern. The list of memory slot indexes for the task A includes the indexes of the memory slots where to write data produced in the consecutive time intervals of the task A, respectively. The list of memory slot indexes for each task Bj includes the indexes of the memory slots where to read the produced data in the consecutive time intervals of the task Bj, respectively. If the task A or Bj has only one time interval in the task scheduling pattern, the index list for said task A or Bj only contains one index of memory slot.

Figure 7 illustrates an example of a group of tasks including one task A producing data and two tasks B1, B2 reading the data produced by the task A. The time intervals of the tasks A, B1, B2 can be specified by the parameters below:

| Task A: | Task B1 : | Task B2 : |
|---|---|---|
| T_A=2 | T_B1=2 | T_B2=10 |
| Δt_A=0 | Δt_B1=1 | Δt_B2=1 |
| D_A=1 | D_B1=1 | D_B2=9 |

In the example of figure 7, the global buffer memory GMEM has two memory slots respectively indexed "0" and "1". In figure 7, an index number is indicated near each time interval: it represents of the index of the memory slot where to write or read data in the global buffer memory GMEM in the corresponding time interval.

In the example of figure 7, the index lists for the tasks A, B1 and B2 are the followings:
- task A: (0,1,1,1,1)
- task B1: (0,1,1,1,1)
- task B2: (0)

In an embodiment, in the step of writing the data produced in a time interval of the task A during a cycle or iteration of the task scheduling pattern, the task A performs a step of determining a memory slot where to write said produced data based on an order information of said time interval in the sequence of time intervals of the task A in the cycle, and a step of writing said produced data at the determined memory slot. The task A may determine the memory slot where to write said produced data by selecting a memory slot index from the index list corresponding to the task A, that matches the sequence of time intervals of the task A in one cycle or task scheduling pattern.

In an embodiment, in the step of reading, by the task Bj, the data produced by the task A in a time interval of said task Bj, the task Bj performs a step of determining a memory slot where to read the produced data based on an order information of said time interval of the task Bj in the sequence of time intervals of the task Bj in the cycle. The task Bj may determine the memory slot where to read the produced data by selecting a memory slot index from the index list corresponding to the task Bj, that matches the sequence of time intervals of the task Bj in one cycle or task scheduling pattern.

In another embodiment, the global buffer memory may be a ring buffer. In that case, the task A producing data may write the data produced in the consecutive time intervals respectively in consecutive memory slots of the ring buffer. In that case, the step of reading from the ring buffer the produced data, by a task Bj, in any time interval of said task Bj, may be performed by searching and finding in the ring buffer a timestamp that is the latest timestamp before the start time of said time interval of the task Bj and then retrieving from the ring buffer the produced data with the found timestamp.

The method may further comprise a step of monitoring if the execution of each executable task has been completed within the corresponding time intervals, at the end of each cycle.

The present disclosure also concerns a computer program comprising instructions which, when the program is executed by a computer, cause the computer to carry out the method of executing the executable tasks as previously described.

The present method may be used in a vehicle including a plurality of sensors for receiving data from the plurality of sensors and using, or consuming, said data by a plurality of systems and/or applications in the vehicle. It allows time scheduling for receiving and using data from multiple sensors and avoid data conflicts.

## Claims

1. A computer implemented method of executing a plurality of executable tasks (A, B) in a computer system, the method comprising
- executing (S1) a first executable task (A) producing data over a plurality of first time intervals (LET_Ai) ;
- writing (S2) in a buffer memory data produced in first time intervals (LET_Ai) with a timestamp indicating an end time of the corresponding first time interval (LET_Ai);
- executing (S3) a second executable task (B) reading the produced data from the buffer memory, over a plurality of second time intervals (LET_Bj), wherein the produced data read in a second time interval has a timestamp before a start time of said second time interval.

2. The method according to claim 1, further comprising a step of selecting (S4), during a second time interval (LET_Bj), the produced data with the latest timestamp before the start time of said second time interval.

3. The method according to claim 1, wherein the time intervals of each executable task are periodic.

4. The method according to claim 2, wherein the time intervals of each executable task have a fixed duration.

5. The method according to any of claims 3 and 4, further comprising a step (S6) of checking if the produced data read from the buffer memory in a second time interval (LET_Bj) has been produced in accordance with a periodicity (T_A) of the first time intervals (LET_Ai), based on the timestamp of said produced data.

6. The method according to claim 5, wherein the step of checking comprises a step of comparing (S61) a time gap between the start time of said second time interval and the timestamp of the produced data read from the buffer memory and the periodicity of the first time intervals, and, if the time gap exceeds the periodicity of the first time intervals, a signal indicative of not producing data with the periodicity of the first time intervals is outputted and an error message is generated (S7).

7. The method according to any of claims 1 to 6, wherein a task scheduling pattern is cyclically executed, said task scheduling pattern including a sequence of one or more first time intervals and a sequence of one or more second time intervals, and, at each cycle:
the step (S2) of writing the data produced in a first time interval with a timestamp indicating an end time of said first time interval includes a step of determining a memory slot where to write said produced data based on an order information of said first interval in the sequence of first time intervals and a step of writing said produced data at the determined memory slot.

8. The method according to claim 7, wherein, the buffer memory including a plurality of indexed memory slots,
determining the memory slot where to write said produced data includes selecting a memory slot index from a predetermined first list of memory slot indexes matching the sequence of first time intervals.

9. The method according to claim 7 or 8, wherein, at each cycle,
the step (S5) of reading the produced data in a second time interval includes determining a memory slot where to read the produced data based on an order information of said second time interval in the sequence of second time intervals.

10. The method according to claim 9, wherein, the buffer memory including a plurality of indexed memory slots,
determining the memory slot where to read the produced data includes selecting a memory slot index from a predetermined second list of memory slot indexes matching the second sequence of second time intervals.

11. The method according to any of claims 1 to 6, wherein the buffer memory is a ring buffer and the step of reading from the buffer memory the produced data, in a second time interval, is performed by searching in the buffer memory a timestamp that is before a start time of said second time interval and retrieving from the buffer memory the produced data with the found timestamp.

12. The method according to any of claims 1 to 11, further comprising a step of monitoring if the execution of each executable task has been completed within the corresponding time interval.

13. A computer system comprising at least one processor configured to perform the method according to any of claims 1 to 11.

14. A computer program comprising instructions which, when the program is executed by a computer, cause the computer to carry out the method according to any of claims 1 to 11.

15. A vehicle including the system according to claim 13.
